**Europäisches Patentamt**

**European Patent Office**

**Office européen des brevets**

(19)

(11) **EP 1 138 362 A2**

(12) **EUROPÄISCHE PATENTANMELDUNG**

(43) Veröffentlichungstag:
04.10.2001 Patentblatt 2001/40

(51) Int Cl.⁷: **B01D 1/30**

(21) Anmeldenummer: 01105411.1

(22) Anmeldetag: 12.03.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **30.03.2000 DE 10015855**

(71) Anmelder: **BASF AKTIENGESELLSCHAFT
67056 Ludwigshafen (DE)**

(72) Erfinder:
• **Oost, Carsten, Dr.
67098 Bad Dürkheim (DE)**
• **Domschke, Thomas, Dr.
67346 Speyer (DE)**

(74) Vertreter: **Isenbruck, Günter, Dr.
Patent- und Rechtsanwälte,
Bardehle-Pagenberg-Dost-Altenburg-Geissler-Isenbruck
Theodor-Heuss-Anlage 12
68165 Mannheim (DE)**

(54) **Anwendung des Lotus-Effekts in der Verfahrenstechnik**

(57) Gegenstand der Erfindung ist ein Verdampfer mit beheizbarer Wärmetauscherfläche, die eine selbstreinigende mikrostrukturierte Oberfläche mit Erhebungen und Vertiefungen aufweist.

Die mikrostrukturierte Oberfläche der Wärmetauscherfläche kann durch Pulverbeschichtung hergestellt werden. Gegenstand der Erfindung ist ferner ein Verfahren zum Eindampfen von Lösungen in einem Verdampfer mit selbstreinigender mikrostrukturierter Wärmetauscherfläche, wobei die einzudampfende Lösung vorzugsweise viskose oder feste Bestandteile gelöst, emulgiert oder suspendiert enthält. Mit den erfindungsgemäßen Verdampfern wird beim Eindampfen der Lösungen ein Anbacken der viskosen bzw. festen Bestandteile an den Wärmetauscherflächen vermieden. Dadurch können derartige Lösungen auf einen Lösungsmittelgehalt von < 5 Gew.-% eingedampft werden.

**EP 1 138 362 A2**

Printed by Jouve, 75001 PARIS (FR)

**Beschreibung**

Die Erfindung betrifft Verdampfer mit mikrostrukturierter Oberfläche sowie Verfahren zum Eindampfen von Lösungen.

In der Verfahrenstechnik werden Stoffgemische mit viskosen oder festen Bestandteilen häufig mittels eines Verdampfers getrennt. Beispiele sind das Einengen von Polymerlösungen, die Aufkonzentrierung von mit Salzen oder Harzen beladenen Lösungen, die Aufarbeitung von Kolonnensümpfen, verschmutzten Stoffen oder Schlämmen sowie im Lebensmittelbereich die Abtrennung von Lösungsmitteln bis in den ppm-Bereich.

Bei diesen Stoffgemischen stellt sich das Problem, daß ihre hochviskosen Eindampf-Rückstände an den Wärmetauscherflächen anbacken und es somit leicht zu Verstopfungen in dem Verdampfer kommt. Außerdem wird durch die sich bildenden Beläge und Verkrustungen die Wärmeduchgangszahl drastisch vermindert.

Um zähe und zum Anhaften neigende Lösungen oder Suspensionen nahezu vollständig einzudampfen mußte bisher durch mechanische Krafteinwirkung sichergestellt werden, daß die Wärmetauscherflächen von Anhaftungen und Verkrustungen freigehalten werden. Dies wird üblicherweise dadurch erreicht, daß rotierende Wischer oder Schaber in die Verdampfer eingebaut werden, die die Wärmetauscherflächen freihalten. Beispiele für derartige Verdampfer-Bauformen sind die in Klaus Sattler, Thermische Trennverfahren, Wiley-VCH Weinheim, Berlin, New-York, 2. Auflage 1995 auf Seite 613 gezeigten Ankerrührer (evaporator with anchor stirrer) und Paddelrührer (evaporator with paddle stirrer). Sollte die einzudampfende Lösung einen pastösen oder sogar festen Zustand erreichen, waren hierzu bisher nur Schneckenmaschinen geeignet. Diese sind jedoch sehr teuer und weisen einen nur geringen Wärmeübergangskoeffizienten auf.

Aufgabe der Erfindung ist, Alternativen für die aus dem Stand der Technik bekannten Verdampfer zum Eindampfen von Lösungen mit viskosen oder festen, zum Anhaften neigenden Bestandteilen bereitzustellen. Aufgabe der Erfindung ist insbesondere, einen kostengünstig herzustellenden Wärmetauscher, bei dem die Wärmetauscherflächen ohne mechanische Krafteinwirkung von Anhaftungen und Verkrustungen freigehalten werden, bereitzustellen.

Gelöst wird die Aufgabe durch Apparate und Apparateteile für den chemischen Anlagebau, die eine selbstreinigende mikrostrukturierte Oberfläche mit Erhebungen und Vertiefungen aufweisen.

Bevorzugte Apparate und Apparateteile, die mit einer selbstreinigenden mikrostrukturierten Oberfläche ausgestattet werden können, sind Apparate-, Behälter- und Reaktorinnenwandungen, Austragsvorrichtungen, Armaturen, Leitungssysteme, Verdampfer, Filter, Zentrifugen, Kolonnen, Trockner, Einbauten, Füllkörper und Mischorgane.

Besonders bevorzugte erfindungsgemäße Apparate sind Verdampfer mit beheizbarer Wärmetauscherfläche, wobei die Wärmetauscherfläche eine selbstreinigende mikrostrukturierte Oberfläche mit Erhebungen und Vertiefungen aufweist.

Unter Apparaten und Apparateteilen sind zu verstehen:

Apparate-, Behälter- und Reaktorinnenwandungen, Austragsvorrichtungen, Armaturen, Leitungssysteme, Verdampfer, Pumpen, Filter, Verdichter, Zentrifugen, Kolonnen, Trockner, Zerkleinerungsmaschinen, Einbauten, Füllkörper und Mischorgane, bevorzugt Apparate-, Behälter- und Reaktor-innenwandungen, Austragsvorrichtungen, Armaturen, Leitungssysteme, Verdampfer, Filter, Zentrifugen, Kolonnen, Trockner, Einbauten, Füllkörper und Mischorgane und ganz besonders bevorzugt Verdampfer.

Präziser lassen sich diese Apparate und Apparateteile wie folgt beschreiben:

- Bei Behältern handelt es sich beispielsweise um Vorlage- oder Sammelbehälter wie beispielsweise Wannen, Silos, Tanks, Fässer, Trommeln oder Gasbehälter.
- Bei den Apparaten und Reaktoren handelt es sich um Flüssig-, Gas/Flüssig-, Flüssig/Flüssig-, Fest/Flüssig- oder Gas/Fest-, Gasreaktoren, die beispielsweise realisiert sind in Rühr-, Strahlschlaufen- und Strahldüsenreaktoren, Strahlpumpen, Verweilzeitzellen, statischen Mischern, Rührkolonnen, Rohrreaktoren, Zylinderrührern, Blasensäulen, Strahl- und Venturiwäschem, Festbettreaktoren, Reaktionskolonnen, Verdampfer, Drehscheibenreaktoren, Extraktionskolonnen, Knet- und Mischreaktoren und Extrudern, Mühlen, Bandreaktoren, Drehrohren oder zirkulierenden Wirbelschichten.
- Bei Austragsvorrichtungen handelt es sich beispielsweise um Austragsstutzen, Austragtrichter, Austragsrohre, Ventile, Austragshähne oder Auswurfvorrichtungen.
- Bei Armaturen kann es sich beispielsweise um Hähne, Ventile, Schieber, Berstscheiben, Rückschlagklappen oder Scheiben handeln.
- Bei Pumpen handelt es sich beispielsweise um Kreisel-, Zahnrad-, Schraubenspindel-, Exzenterschnecken-, Kreiskolben-, Hubkolben-, Membran-, Schneckentrog- oder Strahlflüssigkeitspumpen, außerdem um Hubkolben-, Hubkolben-Membran-, Drehkolben-, Drehschieber-, Flüssigkeitsring-, Wälzkolben- oder Treibmittelvakuumpumpen.
- Bei Filterapparaten handelt es sich beispielsweise um Fluidfilter, Festbettfilter, Gasfilter, Siebe oder Abscheider.
- Bei Verdichtern handelt es sich beispielsweise um Hubkolben-, Hubkolben-Membran, Drehkolben-, Drehschieber-, Flüssigkeitsring-, Rotations-, Roots-, Schrauben-, Strahl- oder Turboverdichter.

- Bei Zentrifugen handelt es sich beispielsweise um Zentrifugen mit Siebmantel oder Vollmantel, wobei Teller-, Vollmantelschnecken- (Dekanter), Siebschnecken- und Schubzentrifügen bevorzugt sind.

- Bei Kolonnen handelt es sich um Behälter mit Austauschböden, wobei Glocken-, Ventil- oder Siebböden bevorzugt sind. Außerdem können die Kolonnen mit unterschiedlichen Füllkörpern wie beispielsweise Sattelkörpern, Raschigringen oder Kugeln befüllt sein.

- Bei Zerkleinerungsmaschinen handelt es sich beispielsweise um Brecher, wobei Hammer-, Prall-, Walzen- oder Backenbrecher bevorzugt sind, oder um Mühlen, wobei Hammer-, Schlagkorb-, Stift-, Prall-, Rohr-, Trommel-, Kugel-, Schwing- und Walzenmühlen bevorzugt sind.

- Bei Einbauten in Reaktoren und Behältern handelt es sich beispielsweise um Thermohülsen, Stromstörer, Schaumzerstörer, Füllkörper, Abstandhalter, Zentriereinrichtungen, Flanschverbindungen, statische Mischer, zur Analytik dienende Instrumente wie pH- oder IR-Sonden, Leitfähigkeitsmessinstrumente, Standmessungsgeräte oder Schaumsonden.

Die selbstreinigenden Oberflächen können wie in der WO 96/04123 beschrieben mikrostrukturiert sein. Die dort beschriebene Oberfläche weist Erhebungen und Vertiefungen auf, wobei der Abstand zwischen den Erhebungen 5 bis 200 μm, vorzugsweise 10 bis 100 μm und die Höhe der Erhebungen 5 bis 100 μm, vorzugsweise 10 bis 50 μm beträgt und zumindest die Erhebungen aus einem hydrophoben Material sind. Die wasserabstoßende Wirkung dieser Oberflächen wird darauf zurückgeführt, daß die Wassertropfen nur auf den Spitzen der Erhebungen aufliegen und so nur eine geringe Kontaktfläche mit der Oberfläche haben. Der Wassertropfen, der die geringstmögliche Oberfläche annimmt, kugelt sich ab und rollt bei der geringsten Erschütterung von der Oberfläche ab. In ähnlicher Weise wird die Adhäsion von festen Partikeln an der Oberfläche verringert. Diese weisen eine mehr oder weniger große Affinität zu Wasser auf, so daß sie mit den abrollenden Tropfen von der Oberfläche entfernt werden.

Eine selbstreinigende mikrostrukturierte Oberfläche gemäß einer Ausführungsform der Erfindung kann wie folgt beschrieben werden.

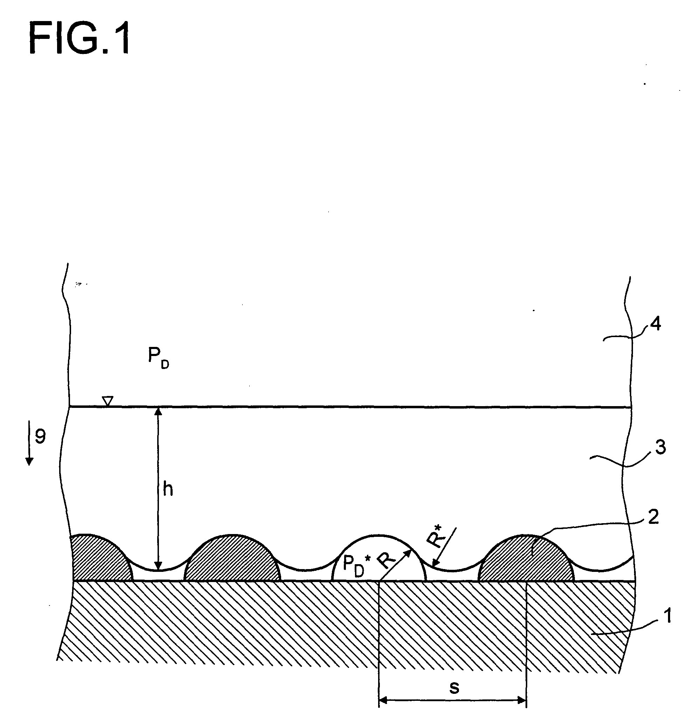

Figur 1 zeigt die idealisierte Darstellung eines Schnitts durch eine selbstreinigende mikrostrukturierte Oberfläche gemäß einer Ausführungsform der Erfindung. Die idealisierte mikrostrukturierte Wärmetauscherfläche (1) weist im Abstand s angeordnete halbkugelförmigen Erhebungen (2) mit Radius R und dazwischenliegenden Vertiefungen auf. Der Abstand s zwischen den Erhebungen (2) ist derart, daß eine zwischen den Erhebungen durchhängende Flüssigkeit (3) einen Krümmungsradius R* einnimmt, wobei die Flüssigkeit (3) nicht die Wärmetauscherfläche (1) in den Vertiefungen zwischen den Erhebungen (2) berührt. Vorzugsweise ist dabei s < 4R. Im Dampfraum (4) stellt sich der Dampfdruck PD der Flüssigkeit (3) bei der Systemtemperatur ein, bei idealen Gemischen also die Summe der Dampfdrücke der Komponenten. Am durchhängenden Bauch der Flüssigkeit herrscht die Summe aus diesem Dampfdruck PD zuzüglich dem hydrostatischen Druck $p_{hy}$, bei einer waagerecht angeordneten Wärmetauscherfläche also

$p_D + \rho_{Fl}$ g h.

Es ist bekannt, daß der Dampfdruck über gekrümmten Phasengrenzflächen größer ist als über ebenen Phasengrenzflächen. Der Dampfdruck über einer gekrümmten Oberfläche beträgt

$$p_D (R^*) = p_D \exp (2\ \sigma_{AB}\ V_{Fl}/(R^* \vartheta\ T),$$

worin

$p_D (R^*)$  der Dampfdruck über der Phasengrenzfläche mit dem Krümmungsradius R*,

$p_D$  der Dampfdruck über der ebenen Phasengrenzfläche,

$\sigma_{AB}$  die Oberflächenspannung zwischen der flüssigen Phase und der festen Phase der Erhebung (2),

$V_{F1}$  das molare Volumen der flüssigen Phase,

$R^*$  der Krümmungsradius der durchhängenden Flüssigkeit,

$\vartheta$  die ideale Gaskonstante und

$T$  die Temperatur

bedeuten.

Die Struktur der Oberfläche ist nun derart, daß R* so klein wird, daß bei den zu erwartenden Filmdicken h der Dampfdruck $p_D(R^*)$ immer mindestens so groß wie die Summe aus $p_D + p_{hy}$ bleibt. Die Flüssigkeit (3) kann dann die Oberfläche nicht benetzen.

Anstatt durch einen hydrostatischen Druck $p_{hy}$ kann der am Bauch der Flüssigkeit herrschende Druck durch einen durch eine Zentrifugalkraft bewirkten zusätzlichen Zentrifugal-Druck erhöht sein. Eine solche Zentrifugalkraft wirkt beispielsweise in einem Wendelrohrverdampfer. Die vorstehenden Beziehungen gelten entsprechend.

Die Nichtbenetzbarkeit von Oberflächen kann somit auf die Dampfdruckerhöhung in kleinen Tropfen zurückgeführt werden. Durch Beheizung der Oberfläche kann dieser Effekt verstärkt werden. Bei Verdampfern ist die Wärmetauscheroberfläche in der Regel heißer als die Flüssigkeit. Die flüssigkeitsabstoßende Wirkung wird dann dadurch unterstützt, daß der Dampfdruck in der eingeschlossenen Dampfblase zusätzlich erhöht wird. Kommt es sogar zum Blasensieden, ist die Oberfläche noch wirkungsvoller vor Benetzung geschützt. Die Flüssigkeitsbäuche werden zu Siedeblasen mit Radius R*.

Bei Systemen, die auch Inertgase enthalten, gelten analoge Gesetze. Zusätzlich zu den Dampfdrükken sind hier noch die Desorptionsdrücke der löslichen inerten Gase zu berücksichtigen. Auch bei gelösten Gasen wird der Desorptionsdruck durch eine gekrümmte Phasengrenzfläche in analoger Weise erhöht.

Reale mikrostrukturierte Oberflächen werden im allgemeinen je nach Art der Herstellung eine von der in Figur 1 angegebenen idealisierten Geometrie mehr oder weniger stark abweichende Geometrie aufweisen. Insbesondere werden die Erhebungen (2) nicht exakt halbkugelförmig sein und ihr Radius R und Abstand s mehr oder weniger variieren. Auch müssen die zwischen den Erhebungen (2) liegenden Vertiefungen nicht plan sein. Vorzugsweise werden die Erhebungen jedoch eine im wesentlichen abgerundete Form haben und im Mittel einen Radius R von 5 bis 100 μm und einen Abstand s von 5 bis 200 μm aufweisen.

Die mikrostrukturierte Oberfläche kann durch Pulverbeschichtung von auf die Oberfläche aufgebrachten Lacken und Klebstoffen hergestellt werden. Hierzu können beispielsweise hydrophobe Pigmente, Teflonpulver, Wachspulver Polypropylenpulver oder ähnliche partikelförmige Stoffe mit geeigneter Teilchengröße auf die mit dem Lack oder Klebstoff benetzte Oberfläche aufgeblasen oder aufgepudert werden. Vorzugsweise weisen die Pulver eine enge Teilchengrößeverteilung auf. Mikrostrukturierte Oberflächen können auch durch Schichtabscheidung aus Lösungen, elektrolytische Abscheidungen, galvanische Verfahren, Ätzvervahren oder Bedampfung erhalten werden.

Der aufzubringende partikelförmige Stoff bzw. die Polarität der mikrostrukturierten Oberfläche werden in Abhängigkeit von dem zu verdampfenden Lösungsmittel gewählt. Im Fall von wäßrigen, wäßrig-organischen oder polaren organischen Lösungsmitteln wird die mikrostrukturierte Oberfläche hydrophobe Eigenschaften aufweisen. Es ist jedoch auch denkbar, zur Abtrennung unpolarer Lösungsmittel den Verdampfer mit einer hydrophilen mikrostrukturierten Oberfläche auszustatten.

Die Mikrostruktur der Wärmetauscheroberfläche bewirkt, daß sowohl Lösungsmittel als auch feste Partikel oder viskose Rückstände auf ihr praktisch nicht haften können. Die Oberfläche ist nicht benetzbar. Dies führt dazu, daß nachströmende Flüssigkeit die die Oberfläche belegenden festen oder viskosen Bestandteile aufnimmt und entfernt.

Prinzipiell können alle üblichen Verdampfertypen mit einer mikrostrukturierten Oberfläche ausgestattet werden. Besonders vorteilhafte Ergebnisse werden jedoch bei solchen Verdampfertypen erzielt, bei denen die Wärmetauscherflächen kontinuierlich von Flüssigkeit überströmt werden. Bevorzugt sind Umlaufverdampfer, Entspannungsverdampfer sowie der sogenannte Wendelrohrverdampfer. Bei einem Umlaufverdampfer wird mit Hilfe einer Pumpe die einzudampfende Flüssigkeit über die Oberfläche gefördert. Der Wendelrohrverdampfer weist ein in From einer Wendel gekrümmtes Verdampferrohr auf. Dieser Verdampfertyp ist in DE-C 2 719 968 beschrieben. Durch eine hohe Geschwindigkeit des Gasstromes (vorzugsweise > 20 m/s) wird die Flüssigkeit an die Rohrwandung gedrückt und die Ausbildung einer Ringströmung erzwungen. Die überlagerte Zentrifugalkraft sorgt für die Ausbildung einer Sekundärströmung, die den Wärmeübergang verbessert. Bei einem mit mikrostrukturierter Oberfläche ausgestatteten Wendelrohrverdampfer gemäß einer bevorzugten Ausführungsform der Erfindung wird überraschenderweise beim Eindampfen von Lösungen, die viskose Rückstände enthalten, ein Anbacken der Rückstände vermieden und gleichzeitig eine hohe Wärmeübergangszahl realisiert. Diese Vorteile werden in allen Verdampferrohren mit mikrostrukturierter Oberfläche, in denen sich eine Ringströmung ausbilden kann, in ähnlicher Weise erzielt. Beispielsweise kann als Verdampfer ein gerades Rohr verwendet werden und durch eine hohe Gasgeschwindigkeit eine Ringströmung erzwungen werden.

Gegenstand der vorliegenden Erfindung ist auch ein Verfahren zum Eindampfen von Lösungen in einem Verdampfer mit selbstreinigender mikrostrukturierter Wärmetauscherfläche. Vorzugsweise enthalten die einzudampfenden Lösung viskose oder feste Bestandteile. Diese können in der einzudampfenden Lösung gelöst, emulgiert oder suspendiert vorliegen. Beispiele sind wäßrige oder wäßrig-organische Lösungen anorganischer Salze, wie katalysatorhaltige wäßrige Butindiol-Lösungen. Bei Anwendung hydrophiler Oberfläche können auch organische Lösungen, beispielsweise Dehydrocolesterinacetat in Xyol, eingedampft werden.

Mit dem erfindungsgemäßen Verfahren ist es möglich, Lösungen bis auf einen Lösungsmittelgehalt von im allgemeinen < 10 Gew.-%, bevorzugt < 5 Gew.-%, besonders bevorzugt < 2 Gew.-% einzudampfen.

Die Erfindung wird durch die nachstehenden Beispiele näher erläutert.

**Beispiele**

**Versuchsapparatur**

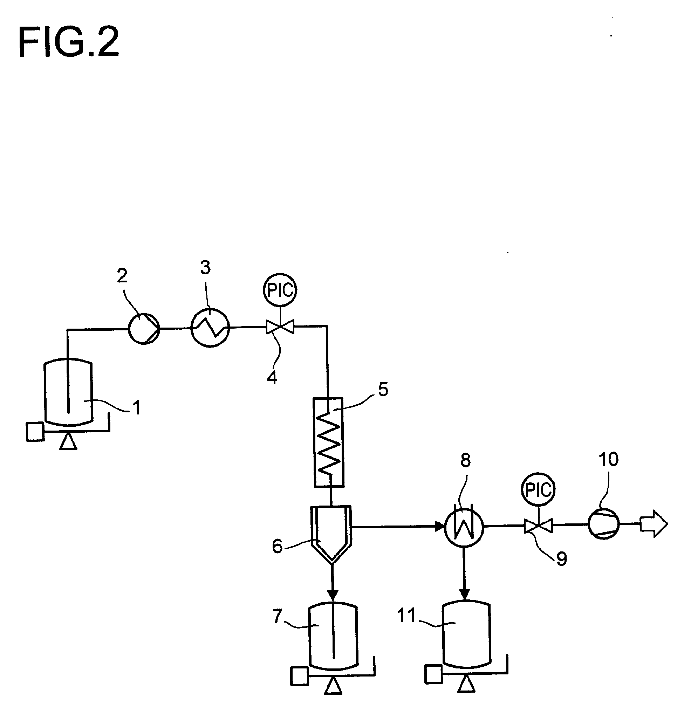

Die Versuche wurden in der in Figur 2 dargestellten Versuchsanlage durchgeführt. Die viskose Rückstände enthaltende Lösung wurde aus dem auf einer Waage stehenden Vorlagebehälter (1) mit Hilfe der Zahnradpumpe (2) in den Vorheizer (3) gepumpt. Hier wurde die Lösung unter Druck aufgeheizt und anschließend über das Regelventil (4) in den erfindungsgemäßen Verdampfer (5) entspannt. Die Mengenströme und der Druck wurden so eingestellt, daß sich im Verdampfer eine Ringströmung ausbildet. Der Verdampfer bestand aus einem gewendelten Glasrohr mit einem Innendurchmesser von 6 mm. Es waren 20 Wendeln mit einem Durchmesser von 70 mm und einer Steigung von ca. 20° installiert. Die Glaswendeln waren mit einer mikrostrukturierten Oberfläche ausgestattet, die durch Aufbringen von UV-härtbarem Lack (Laromer PO 84 F, Dyneon TF 9205 PTFE), Beschichtung mit Teflonpulver mit einer mittleren Teilchengröße von 7 μm und anschließender Härtung erzeugt wurde. Der Austrag des Verdampfers wurde in den beheizten Phasenschneider (6) geleitet, in welchem eine Trennung von Flüssigphase und Dampfphase erfolgte. Der Rückstand (flüssige Phase) wurde im Behälter (7) gesammelt. Der Dampf wurde im Kondensator (8) auskondensiert und im Behälter (11) aufgefangen. Die Apparatur wurde mit Hilfe der Vakuumpumpe (10) und dem Regelventil (9) unter Normaldruck betrieben.

**Beispiel 1**

**Eindampfung einer wässrigen Butindiol-Lösung**

In der oben beschriebenen Apparatur wurde eine 50 %-ige wässrige Lösung von Butindiol, die ca. 5 Gew.-% an Raney-Nickel (Katalysator) enthielt, eingedampft. Hierzu wurden 13, 8 g/h der Lösung bei 10 bar auf 150°C vorgeheizt und bei 20 mbar in den Verdampfer entspannt. Als Destillat wurde die salzfreie wässrige Butindiol-Lösung erhalten. Der Rückstand war ein zäher Kristallbrei mit einem Restgehalt von etwa 1 Gew.-% Wasser. Eine Verkrustung der Verdampferoberfläche wurde mit dem. Verdampfer mit der mikrostrukturierten Oberfläche nicht beobachtet.

In einem Vergleichsversuch mit einem herkömmlichen, den oben beschriebenen Geometrien entsprechenden Verdampfer kam es zur Belegung der Oberfläche. Dies konnte nur durch eine Verringerung des Eindampfungsgrad und der damit verbundenen Verminderung der Produktausbeute kompensiert werden.

**Beispiel 2**

**Eindampfung von einer Salzlösung**

In der oben beschriebenen Apparatur wurde eine 10 %-ige wässrige NaCl-Lösung eingedampft. Hierzu wurden 20 g/h der Lösung bei 10 bar auf 150°C vorgeheizt und bei 20 mbar in den Verdampfer entspannt. Auf diese Weise konnte die Lösung so weit eingeengt werden, daß als Rückstand ein zäher Kristallbrei mit einem Restgehalt von etwa 1 Gew.-% Wasser anfiel. Die auf der Verdampferoberfläche ausfallenden Kristalle wurden stets durch nachlaufendes Wasser weggespült. Eine Verkrustung der Verdampferoberfläche wurde auch bei hohem Einengungsgrad nicht beobachtet. Als Destillat wurde salzfreies Wasser erhalten.

**Patentansprüche**

1. Apparate und Apparateteile für den chemischen Anlagebau, die eine selbstreinigende mikrostrukturierte Oberfläche mit Erhebungen und Vertiefungen aufweisen.

2. Apparate und Apparateteile nach Anspruch 1, ausgewählt aus der Gruppe bestehend aus Apparate-, Behälter- und Reaktorinnenwandungen, Austragsvorrichtungen, Armaturen, Leitungssystemen, Verdampfern, Filtern, Zentrifugen, Kolonnen, Trocknern, Einbauten, Füllkörpern und Mischorganen.

3. Apparat nach Anspruch 2 in Form eines Verdampfers mit beheizbarer Wärmetauscherfläche, wobei die Wärmetauscherfläche eine selbstreinigende mikrostrukturierte Oberfläche mit Erhebungen und Vertiefungen aufweist.

4. Verdampfer nach Anspruch 3 in Form eines Umlauf-, Entspannungs- oder Wendelrohrverdampfers.

5. Verdampfer nach Anspruch 3 in Form eines Verdampferrohres, in dem sich eine Ringströmung ausbilden kann.

6. Verdampfer nach einem der Ansprüche 3 bis 5, **dadurch gekennzeichnet, daß** die mikrostrukturierte Oberfläche der Wärmetauscherfläche durch Pulverbeschichtung hergestellt ist.

7. Verfahren zum Eindampfen von Lösungen in einem Verdampfer mit selbstreinigender mikrostrukturierter Wärmetauscherfläche, wie er in einem der Ansprüche 3 bis 6 definiert ist.

8. Verfahren nach Anspruch 7, **dadurch gekennzeichnet, daß** die einzudampfende Lösung viskose oder feste Bestandteile gelöst, emulgiert oder suspendiert enthält.

9. Verfahren nach Anspruch 7 oder 8, **dadurch gekennzeichnet, daß** die einzudampfende Lösung eine wäßrige oder wäßrig-organische Salzlösung ist.

10. Verfahren nach Anspruch 8 oder 9, **dadurch gekennzeichnet, daß** bis auf einen Lösungsmittelgehalt von < 5 Gew.-% eingedampft wird.

# FIG.1

# FIG.2